# EUROPEAN PATENT APPLICATION

(11) **EP 4 718 192 A1**
(43) Date of publication of application: **01.04.2026**
(21) Application number: 25204074.6
(22) Date of filing: 23.09.2025
(51) Int. Cl.: G05B 19/418

(54) **METHOD AND APPARATUS FOR CONTROLLING AUTOMATIC STATION-PASSING OF YARN SPINDLE, ELECTRONIC DEVICE AND STORAGE MEDIUM**

(30) Priority: 29.09.2024 CN 202411381372
(71) Applicant: Zhejiang Hengyi Petrochemical Co., Ltd., Zhejiang 311200 (CN); Hangzhou Yichen Chemical Fiber Co., Ltd, Hangzhou City Zhejiang 311247 (CN)
(72) Inventor: Peng, Xiantao, Hangzhou, Zhejiang 311200 (CN); Wang, Peng, Hangzhou, Zhejiang 311200 (CN); Qui, Yibo, Hangzhou, Zhejiang 311200 (CN); Chen, Yihe, Hangzhou, Zhejiang 311200 (CN); Jin, Junliang, Hangzhou, Zhejiang 311200 (CN); Li, Dake, Hangzhou, Zhejiang 311200 (CN); Zhang, Junwei, Hangzhou, Zhejiang 311200 (CN)
(74) Representative: Haverkamp Patentanwälte PartG mbB

(57) **Abstract**

Provided are a method and apparatus for controlling automatic station-passing of yarn spindle, and a storage medium, relating to the technical field of chemical fiber intellectualization. The method includes: obtaining (S201), by a first PLC, second operational data of a target station from a second PLC corresponding to the target station, and obtaining first operational data of the target station according to the second operational data; sending (S202), by the first PLC, the first operational data to an MES and receiving station-passing indication information determined by the MES based on the first operational data for the target station; and parsing (S203), by the first PLC, the station-passing indication information to obtain a parsing result and returning the parsing result to the second PLC corresponding to the target station, so that the second PLC controls the target station based on the parsing result to execute a yarn spindle station-passing task.

## Description

### TECHNICAL FIELD

The disclosure relates to the technical field of intellectualization of chemical fiber, and in particular, to a method and apparatus for controlling automatic station-passing of yarn spindle, an electronic device, and a storage medium.

### BACKGROUND

In the field of chemical fiber production, an efficiently operating production line is crucial for ensuring productivity and efficiency. A plurality of precisely coordinated stations are densely distributed on the production line. Of particular importance is the smooth flow of multiple yarn spindles through the production line. The speed of the yarn spindles passing a station directly impacts overall production pace and efficiency, which has become a significant bottleneck in improving output capacity. Therefore, achieving rapid station-passing of the yarn spindles in the production line remains a key challenge to be addressed in current innovations within chemical fiber manufacturing technology.

### SUMMARY

The present disclosure provides a method and apparatus for controlling automatic station-passing of yarn spindle, an electronic device, and a storage medium.

According to a first aspect of the disclosure, provided is a method for controlling automatic station-passing of a yarn spindle applied to a system for controlling automatic station-passing of the yarn spindle, where the system for controlling automatic station-passing of the yarn spindle includes: a Manufacturing Execution System (MES), a first Programmable Logic Controller (PLC), and a plurality of second PLCs, the plurality of second PLCs are connected to the first PLC, and the first PLC is connected to the MES; the method for controlling automatic station-passing of the yarn spindle includes:
obtaining, by the first PLC, second operational data of a target station from a second PLC corresponding to the target station, and obtaining first operational data of the target station according to the second operational data, where one of the plurality of second PLCs is configured for controlling at least one station;
sending, by the first PLC, the first operational data to the MES and receiving station-passing indication information determined by the MES based on the first operational data for the target station; and
parsing, by the first PLC, the station-passing indication information to obtain a parsing result and returning the parsing result to the second PLC corresponding to the target station, so that the second PLC controls the target station based on the parsing result to execute a yarn spindle station-passing task.

According to a second aspect of the disclosure, provided is an apparatus for controlling automatic station-passing of a yarn spindle applied to a system for controlling automatic station-passing of the yarn spindle, where the system for controlling automatic station-passing of the yarn spindle include: a Manufacturing Execution System (MES), a first Programmable Logic Controller (PLC), and a plurality of second PLCs, the plurality of second PLCs are connected to the first PLC, and the first PLC is connected to the MES; the apparatus for controlling automatic station-passing of the yarn spindle includes:
a first control module configured to obtain, by the first PLC, second operational data of a target station from a second PLC corresponding to the target station, and obtain first operational data of the target station according to the second operational data, where one of the plurality of second PLCs is configured for controlling at least one station;
a second control module configured to send, by the first PLC, the first operational data to the MES and receive station-passing indication information determined by the MES based on the first operational data for the target station; and
a third control module configured to parse, by the first PLC, the station-passing indication information to obtain a parsing result and return the parsing result to the second PLC corresponding to the target station, so that the second PLC controls the target station based on the parsing result to execute a yarn spindle station-passing task.

According to a third aspect of the disclosure, provided is an electronic device, including:
at least one processor; and
a memory connected in communication with the at least one processor,
where the memory stores an instruction executable by the at least one processor, and the instruction, when executed by the at least one processor, enables the at least one processor to execute the method of any embodiment of the present disclosure.

According to a fourth aspect of the disclosure, provided is a non-transitory computer-readable storage medium storing a computer instruction thereon, where the computer instruction is used to cause a computer to execute the method of any embodiment of the present disclosure.

According to the technology of the disclosure, automatic station-passing management of yarn spindles can be realized, thereby improving the station-passing efficiency of the yarn spindles.

It should be understood that the statements in this section are not intended to identify key or critical features of the embodiments of the present disclosure, nor are they intended to limit the scope of the present disclosure. Other features of the present disclosure will become apparent from the following description.

### BRIEF DESCRIPTION OF THE DRAWINGS

The above and other features, advantages and aspects of embodiments of the present disclosure will become more apparent with reference to the following detailed description in conjunction with the accompanying drawings. In the drawings, like or similar reference characters designate like or similar elements, in which:
FIG. 1 is a structural diagram schematically illustrating a system for controlling automatic station-passing of a yarn spindle according to an embodiment of the present disclosure;
FIG. 2 is a flowchart schematically illustrating a method for controlling automatic station-passing of a yarn spindle according to an embodiment of the present disclosure;
FIG. 3 is a flowchart schematically illustrating a process of a first PLC sending a station-passing request to an MES according to an embodiment of the present disclosure;
FIG. 4 is a flowchart schematically illustrating a process of the first PLC sending station-passing indication information to a second PLC after the MES generates the station-passing indication information according to an embodiment of the present disclosure;
FIG. 5 is a structural block diagram schematically illustrating an apparatus for controlling automatic station-passing of a yarn spindle according to an embodiment of the present disclosure; and
FIG. 6 is a block diagram schematically illustrating an electronic device for implementing the method for controlling automatic station-passing of the yarn spindle according to the embodiment of the present disclosure.

### DETAILED DESCRIPTION

Exemplary embodiments of the present disclosure will be described below with reference to the accompanying drawings, in which various details of the embodiments of the present disclosure are included to assist understanding, and which are to be considered as merely exemplary. Accordingly, an ordinary person skilled in the art will recognize that various changes and modifications of the embodiments described herein can be made without departing from the scope of the disclosure. Also, descriptions of well-known functions and structures are omitted in the following description for clarity and conciseness.

The terms "first", "second" and "third" in the embodiments and claims of the description of the present disclosure and the above-described drawings are used for distinguishing between similar elements and not necessarily for describing a particular sequential or chronological order. Furthermore, the terms "comprise" and "have" as well as any variations thereof are intended to cover a non-exclusive inclusion, such that a list of steps or elements is included. The method, system, product or apparatus need not be limited to the explicitly listed steps or elements, but may include other steps or elements not expressly listed or inherent to the process, method, product or apparatus.

Before the technical solutions of the embodiments of the present disclosure are introduced, technical terms that may be used in the present disclosure will be further described:

MES: a software system for monitoring and managing a manufacturing process that enables real-time collection, processing and analysis of production data and optimization of production planning and resource allocation.

PLC: an industrial digital computer used for controlling automatic equipment, such as mechanical devices and robots on a production line, which can carry out logic operation and processing on an input signal according to a preset program and output a control signal to control the operation of equipment.

Operational data: operation-related data generated during the manufacturing process, such as device status, product quantity, production schedule, which are basis for the MES and PLC to make decision and control.

Station-passing indication information (also called station-passing instruction): instruction and parameter information generated by the MES with the analysis of the operational data for guiding equipment to execute a station-passing task.

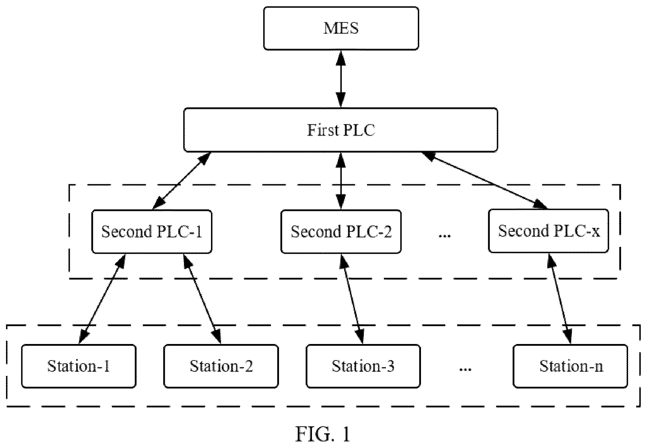

FIG. 1 is a diagram schematically illustrating a system for controlling automatic station-passing of a yarn spindle. As shown in FIG. 1, the system for controlling automatic station-passing of the yarn spindle includes an MES (Manufacturing Execution System), a first PLC (Programmable Logic Controller) and a plurality of second PLCs, where the plurality of second PLCs are connected to the first PLC, the first PLC is connected to the MES, and one of the plurality of second PLCs is responsible for controlling at least one station. The second PLC is mainly responsible for collecting and processing real-time operational data of a target station and providing the real-time operational data to the first PLC for use. The first PLC is responsible for interacting with the second PLC and acquiring second operational data from the second PLC; the first PLC is also responsible for interacting with the MES, sending first operational data to the MES, receiving the station-passing indication information issued from the MES based on the first operational data, and further informing the second PLC of executing the station-passing indication information for the target station.

In some implementations, the MES is configured to determine the station-passing indication information for the target station based on the first operational data sent from the first PLC and return the station-passing indication information to the first PLC.

In some implementations, the first PLC is configured to obtain the first operational data for the target station according to second operational data for the target station obtained from the second PLC.

In some implementations, one of the second PLCs is configured to obtain and store the second operational data of the target station managed and controlled by the second PLC.

Here, the first operational data is a data set, collected and processed by the first PLC, including information on the real-time status of the target station, the processing progress of the yarn spindle, the quality test result of the yarn spindle, the request type, for example. The data is of significant importance for monitoring the operational status of the production line and making a decision as to whether to allow the yarn spindle to pass through the station.

Here, the second operational data is a data set, collected and processed by the second PLC, including information on the real-time status of the target station, the processing progress of the yarn spindle, the quality test result of the yarn spindle, the bar code of the yarn spindle. The data is of significant importance for monitoring the operational status of the production line.

According to the system for controlling automatic station-passing of the yarn spindle, the MES, the first PLC and the second PLC are communicated in real time and process the data, so that the MES can monitor the status of the stations in real time and make adjustment and optimization as required. Through the automatic control, the manual intervention is reduced and the efficiency and the accuracy of the station-passing of the yarn spindle are improved; the material waste and the downtime caused by human errors are reduced, and the cost of the production is lowered. Through the automatic control, the stability and the consistency of the yarn spindle in the process of station-passing are ensured, and the pace and the efficiency of the whole production are favorably improved. By using first PLC as an intermediate layer between the MES and the second PLCs, the system for controlling automatic station-passing of the yarn spindle has remarkable advantages in aspects of centralized management, data integration, MES burden lightening, system expandability enhancement, safety and stability improvement, network structure simplification and the like.

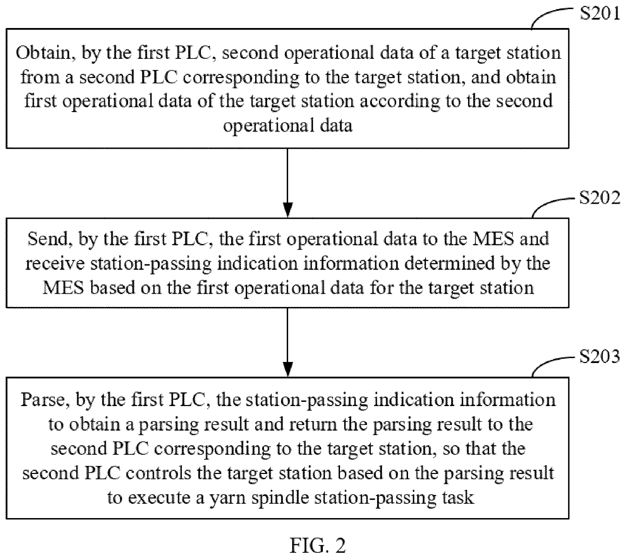

An embodiment of the disclosure provides a method for controlling automatic station-passing of a yarn spindle, and FIG. 2 is a flowchart schematically illustrating the method for controlling automatic station-passing of the yarn spindle according to the embodiment of the present disclosure. The method for controlling automatic station-passing of the yarn spindle can be applied to an apparatus for controlling automatic station-passing of the yarn spindle which is disposed on an electronic device applied to a system for controlling automatic station-passing of the yarn spindle. The electronic device includes, but is not limited to, a stationary device and/or a mobile device. For example, the stationary device includes, but is not limited to, a server, which may be a cloud server or a general server. For example, the mobile device includes, but is not limited to, a mobile phone, a tablet computer, a notebook a computer. In some possible implementations, the method for controlling automatic station-passing of the yarn spindle can also be realized by invoking a computer readable instruction stored in a memory through a processor. As shown in FIG. 2, the method for controlling automatic station-passing of the yarn spindle includes steps of:
S201: obtaining, by the first PLC, second operational data of a target station from a second PLC corresponding to the target station, and obtaining first operational data of the target station according to the second operational data, where one of the plurality of second PLCs is responsible for controlling at least one station;
S202: sending, by the first PLC, the first operational data to the MES and receiving station-passing indication information determined by the MES based on the first operational data for the target station; and
S203: parsing, by the first PLC, the station-passing indication information to obtain a parsing result and returning the parsing result to the second PLC corresponding to the target station, so that the second PLC controls the target station based on the parsing result to execute a yarn spindle station-passing task.

In some implementations, the second PLCs collect and process relevant second operational data (e.g., the position, status and quantity of the yarn spindle) based on the status of respective controlled stations, and the data is stored in a data storage area, such as a Data Block (DB), allocated by the second PLC for its responsible station.

In some implementations, the first PLC regularly obtains the second operational data of the stations from the second PLCs and generates the first operational data for the stations. The first operational data includes information on status and required operations of all the relevant stations.

In some implementations, the MES analyzes the first operational data and determines the station-passing indication information of the target station (namely, the station which needs to execute the yarn spindle station-passing task currently). The station-passing indication information includes permission of station-passing or prohibition of station-passing. When the station-passing indication information is the permission of station-passing, the station-passing indication information can also include parameters such as specific time, target position and speed of station-passing.

In some implementations, the MES transmits the station-passing indication information as generated to the first PLC via the network or other communication manners such as a Management Interface (MI).

In some implementations, after receiving the station-passing indication information from the MES, the first PLC performs parsing and processing to extract a specific control instruction and parameter.

In some implementations, after finishing parsing, the first PLC sends the parsing result (namely, the specific control instruction and parameter) to the second PLC corresponding to the target station through a communication interface or a communication protocol.

In some implementations, after receiving the parsing result, the second PLC controls station-passing equipment such as a mechanical device or a robot of the target station to execute the yarn spindle station-passing task according to the control instruction and parameter in the parsing result.

The main type of the yarn spindle involved in the scheme of the embodiments of the disclosure can include one or more of Partially Oriented Yarns (POY), Fully Drawn Yarns (FDY), or Draw Textured Yarns (DTY) (or called low stretch yarns). For example, the type of the yarn can specifically include Polyester Partially Oriented Yarns, Polyester Fully Drawn Yarns, Polyester Drawn Yarns, Polyester Draw Textured Yarns and Polyester Staple Fiber (PSF).

According to the technical scheme of the embodiment of the disclosure, the MES can monitor the status of the stations in real time through real-time communication and data processing among the MES, the first PLC and the plurality of second PLCs, and adjust and optimize the station-passing strategy on demand. Through automatic control of the yarn spindle station-passing, manual intervention is reduced, the speed and accuracy of the yarn spindle station-passing are increased, and the production cost is lowered. The automatic control of the yarn spindle station-passing can ensure the stability and the uniformity of yarn spindle during the yarn spindle station-passing, thereby advantageously improving the whole production pace and efficiency.

If the MES communicates directly with the plurality of second PLCs, the MES will need to process a large amount of real-time data and requests, which can burden the MES and affect its performance. By using the first PLC as an intermediate layer, the MES only needs to communicate with the first PLC, thereby reducing the processing load of the MES. Without the first PLC as the intermediate layer, the MES needs to establish a direct communication connection with each second PLC, which may result in complex and unmanageable network architecture. The network structure can be greatly simplified by transferring through the first PLC, so that the whole communication process becomes clearer and more orderly. The first PLC can act as a security barrier to verify and filter data from the second PLC to prevent malicious or erroneous data from entering the MES system. Meanwhile, the redundancy and fault-tolerant mechanism of the first PLC can improve the stability and reliability of the system, ensuring that the normal operation of the production line can be maintained when partial equipment fails.

As the production line expands and upgrades, more second PLCs may need to be added. If the MES communicates directly with each second PLC, corresponding configuration and modification of the MES will be required for each extension. By using the first PLC as the intermediate layer, only support for a new second PLC needs to be added in the first PLC, without modifying the MES configuration. The first PLC can receive the operational data from the second PLCs in a centralized manner and perform unified processing and analysis, thereby making the control of the entire production line more centralized and organized and reducing the complexity and the disorder of direct communication between the MES and the second PLCs. The first PLC can integrate data from the different second PLCs to form a more comprehensive production view, which enables the MES to make a decision based on the more comprehensive data to optimize production planning and resource allocation. Meanwhile, the first PLC can also preprocess and filter the data, thereby reducing the amount of data transmitted to the MES and improving the communication efficiency.

In the embodiment of the disclosure, controlling, by the second PLC, the target station based on the parsing result to execute the yarn spindle station-passing task, includes: under the condition that the parsing result indicates permission for station-passing, informing, through the second PLC, the station-passing equipment or directly controlling the station-passing equipment to convey processed yarn spindle at the target station to the next station of the target station.

Here, the station-passing equipment refers to an automatic device, such as a conveying belt, a mechanical arm, and an automatic carrying trolley, used for realizing the transfer of materials (such as yarn spindles) between different stations on the production line. The above is merely an exemplary illustration and should not be construed as a limitation on all potential devices of the station-passing equipment, which are not exhaustively listed here.

In some implementations, the parsing result may include an evaluation result of the MES on whether the yarn spindle at the target station meets the station-passing condition, for guiding a subsequent control operation.

In some implementations, when the parsing result indicates "permission for station-passing", the second PLC can send an instruction or signal to the station-passing equipment to inform the station-passing equipment to prepare to convey the processed yarn spindle at the target station. After receiving the instruction from the second PLC, the station-passing equipment can convey the yarn spindle from the target station to the next station based on a preset program or path. In the process of conveying, a series of actions on the yarn spindle such as gripping, handling and placing may be involved, all of which need to be precisely controlled to ensure safe and accurate conveying of the yarn spindle.

In some implementations, the second PLC continuously monitors the operational status of the station-passing equipment and the conveying condition of the yarn spindle. Once the conveyance is finished, the station-passing equipment will send a feedback signal to the second PLC, confirming that the current yarn spindle has successfully arrived at the next station. The second PLC updates the internal status based on the feedback signal to prepare for the subsequent control operation.

For example, it is assumed that the production line has a plurality of stations, one of which is responsible for a different processing task. After the processing of the yarn spindle at a certain station (such as a weighing station) is finished, the second PLC receives a parsing result of the station (e.g., the parameters such as weight, specification and batch number meet requirements), and determines "permission for station-passing". Subsequently, the second PLC sends an instruction to the station-passing equipment (such as the conveying belt or the robot) to convey the processed yarn spindle to the next station (such as a coil diameter measuring station) for subsequent processing.

As such, the process of passing the yarn spindle through the station can be accurately controlled by the first PLC and the plurality of second PLCs, thereby reducing the waiting time and the manual intervention and improving the overall efficiency of the production line; reducing errors caused by human factors, and improving the stability and the reliability of the production process. The PLC is flexible in programming, can quickly adjust control logic according to production requirements, and is suitable for processing different types and specifications of yarn spindles. The dwell time of the yarn spindle at the station can be significantly shorten to promote the whole smoothness of production line while effectively reducing energy consumption and human cost.

In the embodiment of the disclosure, controlling, by the second PLC, the target station based on the parsing result to execute the yarn spindle station-passing task, includes: under the condition that the parsing result indicates prohibition for station-passing, informing, through the second PLC, the station-passing equipment or directly controlling the station-passing equipment to convey processed yarn spindle at the target station to a rechecking station of the target station.

Here, the rechecking station refers to a station provided in the production line and dedicated to rechecking or evaluating the yarn spindles.

In some implementations, the second PLC first receives the parsing result of the first PLC. A program inside the second PLC carries out logic judgment on the parsing result and determines whether the parsing result is "prohibition for station-passing". The "prohibition for station-passing" generally means that the current yarn spindle does not meet the criteria for continued conveyance and further inspection or processing is required. Once the analysis result is determined to be "prohibition for station-passing", the second PLC immediately sends an instruction or a signal to the station-passing equipment to indicate the station-passing equipment to convey the processed yarn spindle at the target station which does not meet the station-passing condition to the rechecking station. After receiving the instruction, the station-passing equipment may adjust its working state and guide the yarn spindle from the target station to the rechecking station instead of being continuously conveyed to the next production link. The station-passing equipment can ensure the safe and stable movement of the yarn spindle in the conveying process. This may involve the use of conveying belt, robot, or other automated handling equipment to precisely control the path and speed of movement of the yarn spindle. After arriving at the rechecking station, the station-passing equipment sends out an in-place signal to inform the rechecking station to start further inspection or processing of the yarn spindle.

In some implementations, the second PLC may continuously monitor the operational status of the station-passing equipment and the rechecking station. Once the yarn spindle is successfully transferred to the rechecking station and the inspection begins, the second PLC may receive a corresponding status feedback. Based on the rechecking result, the second PLC may further adjust the control strategy, including, for example, allowing the yarn spindle to proceed forward, initiating a rework process, or flagging it as defective.

For example, after a yarn spindle at a certain station (e.g., a coil diameter measuring station) is processed, the second PLC receives the parsing result of "prohibition for station-passing" because the diameter of the yarn spindle does not meet the preset standard. At this point, the second PLC informs the station-passing equipment or directly controls the station-passing equipment to convey the yarn spindle to the rechecking station for re-measurement and evaluation. At the rechecking station, an operator or automatic equipment can carry out detailed inspection on the yarn spindle, and judge whether to return the yarn spindle to the manual measuring station for reworking or treat the yarn spindle as an unqualified product according to the rechecking result.

As such, it can be ensured that only the qualified yarn spindle proceeds with the next production link by guiding the unqualified yarn spindle to the rechecking station for further inspection in time, and the unqualified yarn spindle is prevented from being continuously conveyed forwards, thereby improving the quality of final products. The production flow is flexibly adjusted according to the rechecking result, so that various changes and uncertainties in the production process can be better coped with.

In the embodiment of the disclosure, controlling, by the second PLC, the target station based on the parsing result to execute the yarn spindle station-passing task, includes: under the condition that the parsing result indicates prohibition for station-passing, informing, through the second PLC, the station-passing equipment or directly controlling the station-passing equipment to disable the target station from executing the yarn spindle station-passing task, and resending the second operational data for the target station.

In some embodiments, the program inside the second PLC performs logic judgment on the parsing result, and immediately triggers a corresponding control logic once the "prohibition for station-passing" is confirmed. The second PLC sends an instruction or a signal to the station-passing equipment via a communication interface (such as Ethernet and a serial port) to explicitly indicate the station-passing equipment to disable the execution of the yarn spindle station-passing task of the current target station. This means that the station-passing equipment will halt or withdraw the station-passing instruction that may have been issued before, ensuring that the yarn spindle will not proceed to the next station.

In some embodiments, the second PLC may re-collect or collate the second operational data for the target station as needed while prohibiting the station-passing. Such data may include detailed parameters of the yarn spindle, error logging during processing, or other information relevant to the decision of the station-passing. After finishing the collation, the second PLC sends new operational data to the first PLC so as to re-evaluate the status of the yarn spindle or trigger other corresponding processing flows.

In some embodiments, the second PLC continuously monitors the status of the target station and station-passing equipment to ensure that the instruction of prohibition for station-passing was executed correctly. Once the status changes (e.g., the yarn spindle is re-processed to meet the station-passing condition), the second PLC may receive the corresponding feedback signal and adjust the control strategy according to the new parsing result.

For example, when a size of the yarn spindle at a certain station (e.g., the coil diameter measuring station) is determined as "prohibition for station-passing" because the size is not satisfactory, the second PLC immediately informs the station-passing equipment or directly controls the station-passing equipment to stop the conveyance of the yarn spindle, and at the same time collects detailed data (e.g., actual size and deviation value in relation to standard size) about the yarn spindle. Subsequently, the data is re-sent to the MES for analysis to determine if reworking of the yarn spindle or adjustment of winder parameters is required.

As such, the situation that the potential quality problem influences the subsequent production link is prevented by prohibiting the non-standard yarn spindle from passing through the station in time, thereby improving the safety of the whole production line and optimizing the utilization efficiency of production resources. The production flow is allowed to be adjusted according to real-time data, the change in the production process is quickly responded, and the flexibility and the adaptability of the production line are improved.

In the embodiment of the disclosure, the method for controlling the automatic station-passing of the yarn spindle further includes: under the condition that the parsing result indicates prohibition for station-passing, informing, by the second PLC, the station control equipment to output a station-passing abnormality alarm.

In some implementations, the station-passing abnormality alarm includes, but is not limited to: in the system for controlling automatic station-passing of the yarn spindle, when the yarn spindle is found not to meet the station-passing condition, a warning signal is sent out to field personnel through devices such as an audible and visual alarm or a display screen to prompt abnormal conditions need to be processed.

In some implementations, once the parsing result indicates the "prohibition for station-passing", the second PLC immediately recognizes the presence of the abnormal condition and prepares to trigger a corresponding alarm mechanism. The second PLC sends an instruction to the station-passing equipment via the communication interface to explicitly indicates the station-passing equipment to disable the execution of the yarn spindle station-passing task of the current target station. Meanwhile, the second PLC sends an additional signal or instruction to the station-passing equipment to indicate the station-passing equipment to start a station-passing abnormity alarm function.

In some implementations, outputting of the station-passing abnormality alarm includes: after the station-passing equipment receives the alarm instruction, immediately activating the alarm device (such as the audible and visual alarm or the display screen). The alarm device can send out obvious acousto-optic signals to attract the attention of field personnel and display or broadcast specific alarm information (e.g., "Abnormal yarn spindle station-passing, please check").

In some implementations, the second PLC may record relevant information of the abnormal event, including occurrence time, target station, reason of abnormality, for example, for subsequent analysis and tracing.

Taking an automatic packaging line in the chemical fiber industry as an example, when a yarn spindle at a certain station (such as a first station for bagging) is judged to be "prohibition for station-passing" due to bagging failure, the second PLC may immediately inform the station-passing equipment or directly control the station-passing equipment to stop the conveyance of the yarn spindle, and simultaneously trigger the station-passing abnormality alarm. At the moment, the audible and visual alarm on the production line can send out an ear-piercing alarm sound and twinkling red light, and meanwhile, the prompt information of "Abnormal yarn spindle station-passing at the first station for bagging, please check" can be displayed on the display screen. After seeing the warning, the field personnel can immediately go to the first station for bagging to inspect the problem and take corresponding measure to solve the abnormality.

As such, by outputting the station-passing abnormity alarm in time, it is possible to rapidly attract the attention of field personnel, shorten the time for discovering and solving the problem, avoid the production accident or quality problem possibly caused by the continuous conveyance of the unqualified yarn spindle, and improve the overall safety of the production line. By quickly solving the problem of abnormal station-passing, it is possible to reduce the downtime of the production line and improve the efficiency and capacity of the production.

In the embodiment of the present disclosure, determining, by the MES, the station-passing indication information for the target station based on the first operational data sent from the first PLC, includes: parsing, by the MES, the first operational data to obtain target character string data corresponding to the target station; and judging whether the yarn spindle at the target station meets the station-passing condition based on the target character string data, if the station-passing condition is met, determining that the station-passing indication information is permission for station-passing; if the station-passing condition is not met, determining that the station-passing indication information is prohibition for station-passing.

In some implementations, the station-passing indication information is used to indicate whether the yarn spindle on the production line can be passed through to the next station for processing. The station-passing indication information may be "permission for station-passing" or "prohibition for station-passing" according to a judgment result of the station-passing condition.

In some implementations, the MES first receives the first operational data sent from the first PLC. These data typically include status information about the target station on the production line, the processing progress of the yarn spindle, the quality test result, and the number of times the station-passing is requested. A dedicated data parsing module is built inside the MES, which is configured to parse the received first operational data to extract target character string data corresponding to the target station. The target character string data may be encoded to represent a particular working status or attribute.

In some implementations, based on the parsed target character string data, the MES further performs a comparison analysis with a preset station-passing condition. The station-passing condition may include whether the processing quality of the yarn spindle satisfies standard, whether all processing tasks of the current station are completed, and whether the equipment fault or the production abnormality is present, for example. If the yarn spindle at the target station meets all preset station-passing conditions, the MES determines that the station-passing indication information is "permission for station-passing", representing that the yarn spindle can be safely conveyed to the next station for further processing. If the yarn spindle at the target station does not meet any one of the station-passing conditions, the MES determines that the station-passing indication information is "prohibition for station-passing" and possibly triggers a corresponding alarm mechanism to inform field personnel to check and process.

In some implementations, the MES sends the judgement result ("permission for station-passing" or "prohibition for station-passing") as the station-passing indication information to the second PLC or other associated control device via the communication interface. The station-passing equipment executes corresponding control logic, such as starting or stopping the conveying action of the yarn spindle, according to the received station-passing indication information.

Taking an automatic packaging line in the chemical fiber industry as an example, when detecting that the processing of yarn spindle at a certain station (such as a weighing station) is completed, the first PLC may send the first operational data containing status information of the station to the MES. After receiving the data, the MES parses out the target character string data (such as two-dimension code and weight information of the yarn spindle with the station-passing request) and compares the target character string data with the preset station-passing condition (such as whether the weight of the yarn spindle of the specification is within an allowable range, A grade: within the allowable range, B grade: light in weight, and C grade: heavy in weight). If the quality grade of the yarn spindle is A grade, the MES determines that the station-passing indication information is "permission for station-passing" and informs the second PLC to start the conveying action of the yarn spindle; if the quality grade of the yarn spindle is grade B or grade C, the MES determines that the station-passing indication information is "prohibition for station-passing", and triggers an alarm mechanism.

As such, it can be ensured that only the yarn spindle meeting the requirement is continuously conveyed through the parsing of the first operational data and the accurate judgment of the station-passing condition by the MES, thereby improving the accuracy and the reliability of production. The conveying of the yarn spindle which does not meet the station-passing condition is found and prevented in time, so that abnormal conditions in the production process, such as equipment fault and quality problem, can be reduced, thereby reducing the production risk. Through automatic judgment and the station-passing indication information, the manual intervention and waiting time can be reduced, thereby improving the overall operation efficiency of the production line.

In the embodiment of the disclosure, obtaining, by the first PLC, the second operational data of the target station from the second PLC corresponding to the target station, includes: regularly obtaining, by the first PLC, the second operational data of the target station from the second PLC.

In some implementations, a timer is provided in the first PLC for controlling a time interval for data collection. The time interval can be adjusted according to the actual requirement of the production line, so that the latest data can be obtained in time while the burden of the system cannot be increased due to over-frequent data exchange. When the timer reaches a set time point, the first PLC sends a data request signal to the second PLC. This signal contains information such as the type of data to be obtained and the identifier of the target station, so that the second PLC can accurately return corresponding data.

In some implementations, after receiving the data request of the first PLC, the second PLC searches its own database or real-time data cache for the second operational data of the target station according to information in the request, and sends the second operational data to the first PLC via the communication interface. The data may include real-time status of the target station, processing progress, and quality test result, for example.

In some implementations, after obtaining the second operational data, the first PLC may parse and process the second operational data to extract required information for subsequent decision-making or control operations. At the same time, the data may also be used to update relevant data in the MES or generate a report.

As such, by regularly obtaining the second operational data of the target station from the second PLC, the real-time monitoring of the production line status can be realized, thereby ensuring the transparence and traceability of the production process. Based on the real-time data, the MES or the first PLC can discover the abnormal condition in the production process in time and take a corresponding adjustment measure, such as stopping the station-passing and adjusting a process parameter, to improve the production efficiency and the product quality. Through the analysis of historical data and real-time data, powerful support can be provided for optimization and decision-making of the production line, such as prediction of production trend and optimization of production plan.

In the embodiment of the disclosure, obtaining, by the first PLC, the first operational data according to the second operational data of the target station obtained from the second PLC corresponding to the target station, includes: converting, by the first PLC, the second operational data into the first operational data in a data storage format according to a preset data storage format, where the first operational data is stored in a data storage area allocated to the target station by the first PLC, and different types of variables in the first operational data correspond to different fixed addresses in the data storage area.

Here, the data storage format refers to a specific format or specification applied by data in the storage or transmission process, and includes a data type, a data unit, and a data encoding, for example.

Here, the data storage area refers to a specific area for storing data inside the first PLC.

Here, the fixed address refers to a unique, unchanging storage location allocated for different variables in the data storage area. The fixed address can achieve quick access and modification of variables.

In some implementations, in the system for controlling the automatic station-passing of the yarn spindle, the first PLC is responsible for generating the first operational data of the target station according to the second operational data of the target station. The data may contain various types of information such as status code, numerical parameter and time stamp. The first PLC is internally configured with a preset data storage format to ensure that the data can be efficiently exchanged and parsed between different PLCs or between the PLC and the MES. The first PLC converts the second operational data according to the preset format. The conversion process may include conversion of data types (e.g., integer to floating point), unification of data units (e.g., millimeter to inch), and decoding of data en-codings (e.g., binary conversion). The converted data is the first operational data, which follows the preset data storage format, so as to facilitate the subsequent processing and transmission. The first PLC allocates a dedicated data storage area to the target station on the production line. The first operational data is stored in a data storage area corresponding to the target station. The different variables (such as the status code and the numerical parameter), when stored, are allocated to different fixed addresses in the storage area. When the value of a certain variable needs to be read or modified, the variable can be directly accessed through the corresponding address, thereby improving the data processing efficiency.

As such, the preset data storage format and the format conversion process can ensure the consistency and the accuracy of the data from different sources in the exchange and processing processes. The fixed storage address is allocated to the variable, thereby simplifying the data access and processing process and improving the overall performance of the system. The allocation and format definition of the data storage area have certain flexibility and can be expanded and adjusted according to the actual requirement of the production line.

Hereinafter, the processing flow of the first PLC, which serves as an intermediate layer between the MES and the second PLC, will be described by taking an example in which an IT-PLC represents the first PLC and an ME-PLC represents the second PLC.

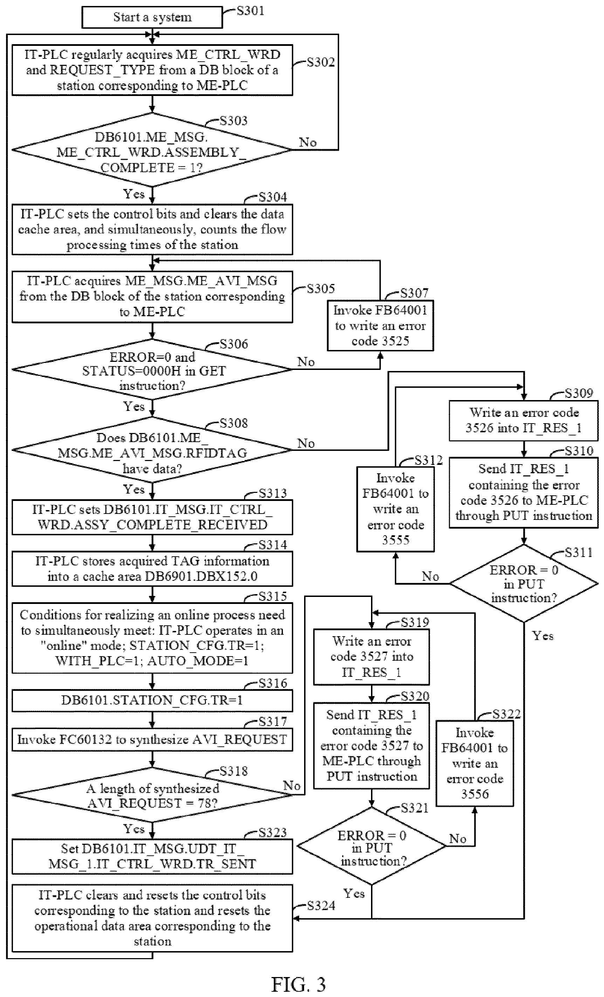

-FIG. 3 is a flowchart schematically illustrating a process of a first PLC sending a station-passing request to an MES. As shown in FIG. 3, the process flow includes:
S301: a system is started;
S302: IT-PLC regularly acquires ME_CTRL_WRD and REQUEST_TYPE from a DB block of a station corresponding to ME-PLC.

Here, ME_CTRL_WRD represents a control bit for the target station, and REQUEST_TYPE represents a request type of the target station.

For example, ME_CTRL_WRD and REQUEST_TYPE are obtained from DB6101.ME_MSG.ME_CTRL_WRD&ME_MSG. Here, 6101 is the number of the target station, DB6101.ME_MSG represents a DB block allocated by ME-PLC for the station No. 6101, DB6101.ME_MSG.ME_CTRL _WRD&ME_MSG represents a variable in the DB block allocated by ME-PLC for the station No. 6101 to store control bits and request type of the station.
S303: DB6101.ME_MSG.ME_CTRL_WRD.ASSEMBLY_COMPLETE = 1? If yes, the process proceeds to S304, or otherwise, the process returns to S302;
Here, IT-PLC acquires ME_CTRL_WRD.ASSEMBLY_COMPLETE from DB of station corresponding to ME-PLC.

Here, ME_CTRL_WRD.ASSEMBLY_COMPLETE=1 represents that the ME-PLC is set to have started the station-passing.

Here,
DB6101.ME_MSG.ME_CTRL_WRD.ASSEMBLY_COMPLETE is a variable in the DB block allocated by ME-PLC for the station No. 6101 to store that ME-PLC is set to have started the station-passing.
S304: IT-PLC sets the control bits and clears the data cache area to ensure that the current process is not influenced by residual data of other processes, simultaneously, IT-PLC counts the flow processing times of the target station and then the process proceeds to S305;
S305: IT-PLC acquires ME_MSG.ME_AVI_MSG from the DB block of the station corresponding to ME-PLC;

Here, ME_MSG.ME_AVI_MSG represents the second operational data written by ME-PLC, such as serial number and type.

It should be noted that ME_MSG.ME_AVI_MSG written by ME-PLC into the DB block of its corresponding station should be checked at ME-PLC to ensure the integrity and accuracy of the data.
S306: ERROR=0 and STATUS=0000H in GET instruction? If not, the process proceeds to S307, or if yes, the process proceeds to S308;
Here, ERROR=0 represents that the GET instruction has no error. STATUS =0000H represents a status value =0, where H represents hexadecimal. The GET instruction is an instruction for IT-PLC to obtain data from ME-PLC.
S307: FB64001 is invoked to write an error code 3525, and then the process returns to S305;
Here, different error codes represent different error types. The error code 3525 represents that ERROR≠0 and STATUS≠0000H in the GET instruction.

Here, FB represents a module integrated with a function of writing an error code. FB64001 is a function module number for writing different error codes, such as error code 3525.

S308: Does DB6101.ME_MSG.ME_AVI_MSG.RFIDTAG have data? If not, the process proceeds to S309, or if yes, the process proceeds to S313;
Here, ME_MSG.ME_AVI_MSG represents operational data written by ME-PLC, such as the serial number and the type. RFIDTAG represents information of the yarn spindle such as doffing time, bar code or two-dimensional code.

Here, DB6101.ME_MSG.ME_AVI_MSG.RFIDTAG represents a variable in the DB block allocated by ME-PLC for the station No. 6101 to store RFIDTAG.

S309: an error code 3526 is written into IT_RES_1;
Here, IT_MSG.UDT_IT_MSG_1.IT_RES_1 (abbreviated as IT_RES_1) represents the first operational data output from IT-PLC, such as the processing result.

Here, the error code 3526 represents there is no data in DB6101.ME_MSG.ME_AVI_MSG.RFIDTAG.
S310: IT_RES_1 containing the error code 3526 is sent to ME-PLC through a PUT instruction;
S311: ERROR = 0 in the PUT instruction? If yes, the process proceeds to S324, or if not, the process proceeds to S312;

Here, the PUT instruction is an instruction for IT-PLC to send data to ME-PLC.
S312: FB64001 is invoked to write an error code 3555, then the process returns to S309;

Here, FB64001 is a function block number also used for writing the error code 3555.

Here, the error code 3555 represents that ERROR≠0 in the PUT instruction, and the PUT instruction is a PUT instruction issued when there is no data in DB6101.ME_MSG.ME_AVI_MSG.RFIDTAG.
S313: IT-PLC sets DB6101.IT_MSG.IT_CTRL_WRD.ASSY_COMPLETE_RECEIVED, and then the process proceeds to S314;

Here, IT_MSG.IT_CTRL_WRD.ASSY_COMPLETE_RECEIVED represents that IT-PLC acknowledges receipt of a message that ME-PLC is set to start the station-passing. DB6101.IT_MSG represents the DB block allocated by IT-PLC for the station No. 6101.

DB6101.IT_MSG.IT_CTRL_WRD.ASSY_COMPLETE_RECEIVED represents a variable in the DB block allocated by IT-PLC for the station No. 6101 to store the message that ME-PLC is set to start the station-passing.

S314: IT-PLC stores acquired TAG information into a cache area DB6901.DBX152.0, and then the process proceeds to S315.

Here, the TAG information extracts the bar code or two-dimensional code information of the yarn spindle from RFIDTAG.

Here, DB6901.DBX152.0 is a variable in the DB block allocated by the IT-PLC for the station No. 6101 to store the bar code information of the yarn spindle.

S315: conditions for realizing an online process need to simultaneously meet: IT-PLC operates in an "online" mode; STATION_CFG.TR=1; WITH_PLC=1; AUTO_MODE=1.

Here, WITH_PLC=1 represents that an online/offline knob of IT-PLC (also referred to as a control button of IT-PLC) is rotated to an online position.

Here, ME_MSG.ME_CTRL_WRD.AUTO_MODE (abbreviated as AUTO_MODE) represents that ME-PLC is in an automatic mode.

Here, IT-PLC reads the online/offline mode of ME-PLC from DB6101.ME_MSG.ME_CTRL_WRD.AUTO_MODE.

Here, DB6101.ME_MSG.ME_CTRL_WRD.AUTO_MODE is a variable in the DB block allocated by IT-PLC for the station No. 6101 to store a rotational position of the online/offline knob of IT-PLC.

S316: DB6101.STATION_CFG.TR=1.

Here, STATION_CFG.TR is used to indicate that station-passing log is enabled for the current station.

Here, DB6101.STATION_CFG.TR is a variable in the DB block allocated by IT-PLC for the station No. 6101 to store that the station-passing log is enabled for the station.
S317: FC60132 is invoked to synthesize AVI_REQUEST;

Here, AVI_REQUEST, which is abbreviated MI_REQUEST.AVI_REQUEST, represents a request character string sent from IT-PLC to MES.

Here, the FC is a custom function module. FC60132 is a function module number which is used to synthesize AVI_REQUEST for station No. 6101.

Here, variables in DB6101 are configured to corresponding pins of FC60132, and FC60132 outputs AVI_REQUEST.
S318: a length of synthesized AVI_REQUEST = 78? If not, the process proceeds to S319;

Here, 78 is a preset length threshold, which can be set or adjusted as required.
S319: an error code 3527 is written into IT_RES_1;

Here, the error code 3527 represents that the length of AVI_REQUEST # 78.
S320: IT_RES_1 containing the error code 3527 is sent to ME-PLC through PUT instruction;
S321: ERROR = 0 in PUT instruction? If not, PUT instruction S322; or if yes, PUT instruction S324;
S322: FB64001 is invoked to write an error code 3556, then the process returns to S319;

Here, the error code 3556 represents the PUT instruction is issued when ERROR≠0 in the PUT instruction and the length of synthesized AVI_REQUEST ≠78.

S323: DB6101.IT_MSG.UDT_IT_MSG_1.IT_CTRL_WRD.TR_SENT is set.

Here, IT_MSG_1.IT_CTRL_WRD.TR_SENT represents that IT-PLC is set after writing AVI_REQUEST.

Here, DB6101.IT_MSG.UDT_IT_MSG_1.IT_CTRL_WRD.TR_SENT is a variable in the DB block allocated by IT-PLC for the station No. 6101 to represent that IT-PLC is set after writing AVI_REQUEST.

After IT-PLC sets IT_MSG_1.IT_CTRL_WRD.TR_SENT, a processing result of MES is awaited. MES typically performs the process as follows: MES reads the request character string sent from IT-PLC to MES, writes into a database and then resets AVI_REQUEST, and MES sends a response character string to IT-PLC.

S324: IT-PLC clears and resets the control bits corresponding to the station and resets the operational data area corresponding to the station.

Here, IT-PLC clearing and resetting the corresponding control bits may include:
DB6101.IT_MSG.UDT_IT _MSG_1.IT_CTRL_WRD.ASSY_COMPLETE_ RECEIVED = 0;
DB6101.IT_MSG.UDT_IT_MSG_1.IT_CTRL_WRD.TR_SENT=0;
DB6101.IT_MSG.UDT_IT_MSG_1.IT_CTRL_WRD.TS_RECEIVED=0;
DB6101.IT_MSG.UDT_IT_MSG_1.IT_CTRL_WRD.MES_COMPLETE=0 ; and
clearing temporary variables used in DB6901

Here, DB6901 represents an area in the DB block which is allocated by ME-PLC for the station No. 6101 to store the temporary variables.

Here, DB6101.IT_MSG represents a data buffer area in the DB block which is allocated by ME-PLC for the station No. 6101 to store varied variables.

Here, IT_CTRL_WRD.ASSY_COMPLETE_RECEIVED represents a variable confirming the receipt of setting ME-PLC to start the station-passing.

Here, IT_CTRL _WRD.TR_SENT represents a variable of setting IT-PLC after writing AVI_REQUEST.

Here, IT_CTRL_WRD.TS_RECEIVED represents a variable of setting IT-PLC after receiving MES data.

Here, IT_CTRL _WRD.MES_COMPLETE represents that IT-PLC informs ME-PLC that data processing is completed.

Here, IT-PLC resetting the corresponding operational data area includes: invoking FC11 to reset DB6101.ME_AVI_MSG.

Here, FC11 is a module integrated with a reset function for ME_AVI_MSG. Here, ME_AVI_MSG represents second operational data written by ME-PLC.

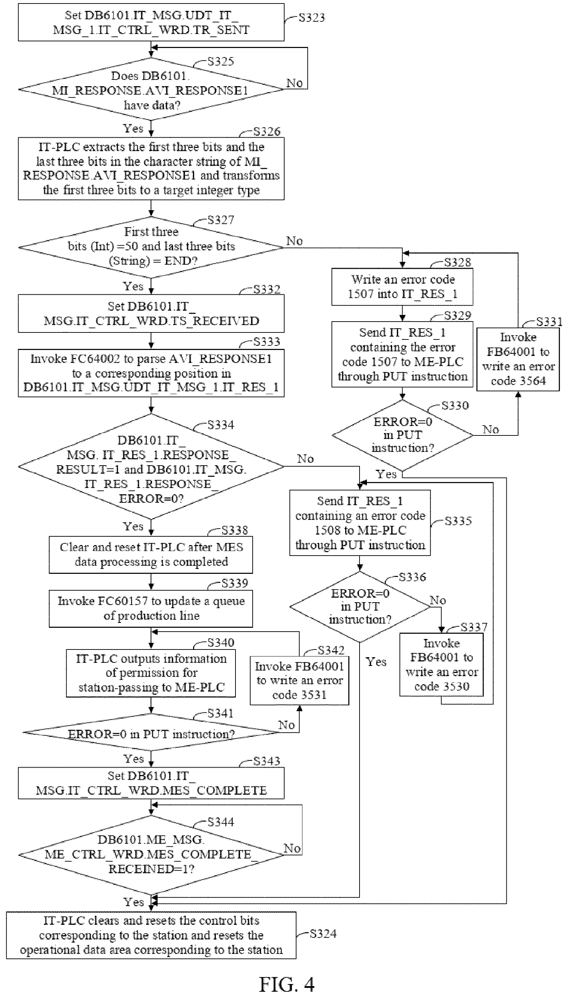

On the basis of FIG. 3, FIG. 4 schematically illustrates a processing flowchart of a first PLC sending the station-passing indication information to the second PLC after MES generates the station-passing indication information. As shown in FIG. 4, the process includes:
S325: Does DB6101.MI_RESPONSE.AVI_RESPONSE1 have data? If not, the process repeatedly executes S325; or if yes, the process proceeds to S326;

Here, MI_RESPONSE.AVI_RESPONSE1 represents a response character string sent from MES to IT-PLC. DB6101.MI_RESPONSE.AVI_RESPONSE1 is a variable in the DB block allocated by IT-PLC for the station No. 6101 to store the response character string sent from MES to IT-PLC.

S326: IT-PLC extracts the first three bits and the last three bits in the character string of MI_RESPONSE.AVI_RESPONSE1 and transforms the first three bits to a target integer type.

Here, a type name of the target integer type is "int".

It should be noted that the format of the response character string returned by MES must be correct, and any format errors are not allowed. Format verification is added as a secondary verification.
S327: first three bits (Int) =50 and last three bits (String) = END? If not, the process proceeds to S328; or if yes, the process proceeds to S332;

Here, String represents a data type of character string.

Here, IT-PLC checks whether the response character string returned by MES is qualified by the characters of the first three bits and the last three bits.
S328: an error code 1507 is written into IT_RES_1;

Here, the error code 1507 represents that the first three bits (Int) ≠ 50 or the last three bits (String) ≠ END, i.e., MES did not return a response message in an agreed format.
S329: IT_RES_1 containing the error code 1507 is sent to ME-PLC through the PUT instruction;
S330: ERROR = 0 in the PUT instruction? If not, the process proceeds to S331; or if yes, the process proceeds to S324;
S331: FB64001 is invoked to write an error code 3564, then the process returns to S328;

Here, the error code 3564 represents that the ERROR≠0 in the PUT instruction, and the PUT instruction is issued when the first three bits (Int)≠50 or the last three bits (String)≠END.
S332: IT-PLC sets DB6101.IT_MSG.IT_CTRL_WRD.TS_RECEIVED;

Here, IT_MSG.IT_CTRL_WRD.TS_RECEIVED represents that the IT-PLC is set after receiving MES data.
S333: FC64002 is invoked to parse AVI_RESPONSE1 to a corresponding position in DB6101.IT_MSG.UDT_IT_MSG_1.IT_RES_1;

Here, IT_MSG.UDT_IT_MSG_1.IT_RES_1 (abbreviated as IT_RES_1) represents the first operational data output by IT-PLC, such as the processing result.
S334: DB6101.IT_MSG. IT_RES_1.RESPONSE_RESULT=1 and DB6101.IT_MSG. IT_RES_1.RESPONSE_ERROR=0? If yes, the process proceeds to S338; or if not, the process proceeds to S335;

DB6101.IT_MSG.UDT_IT_MSG_1.IT_RES_1.RESPONSE_RESULT (abbreviated as DB6101.IT_MSG. IT_RES_1.RESPONSE_RESULT) is a variable that stores whether IT-PLC receives the response character string successfully.

DB6101.IT_MSG.UDT_IT_MSG_1.IT_RES_1.RESPONSE_ERROR (abbreviated as DB6101.IT_MSG. IT_RES_1.RESPONSE_ERROR) is a variable in the DB block allocated by IT-PLC to the station No. 6101 to store whether the response character string sent from MES to IT-PLC has errors.

Here, RESPONSE_RESULT=1 represents that the response character string is successfully received.

Here, RESPONSE_ERROR=0 represents that the response character string sent from MES to IT-PLC has no error.
S335: IT_RES_1 containing an error code 1508 is sent to ME-PLC through the PUT instruction;

Here, the error code 1508 represents that there is information indicating prohibition for station-passing in the response information returned by MES.
S336: ERROR=0 in the PUT instruction? If yes, the process proceeds to S324; or if not, the process proceeds to S337;
S337: FB64001 is invoked to write an error code 3530, and the process returns to S335;

Here, the error code 3530 represents that ERROR≠0 in the PUT instruction, and the PUT instruction is issued when RESPONSE_RESULT≠1 or RESPONSE_ERROR≠0.
S338: IT-PLC is cleared and reset after MES data processing is completed;
S339: FC60157 is invoked to update a queue of production line;

Here, FC60157 is a module integrated with a function of updating the queue of production line.
S340: IT-PLC outputs information of permission for station-passing to ME-PLC;
S341: ERROR=0 in the PUT instruction? If not, the process proceeds to S342; if yes, the process proceeds to S343;
S342: FB64001 is invoked to write an error code 3531, then the process returns to S340;

Here, the error code 3531 represents that ERROR≠0 in the PUT instruction, and the PUT instruction is issued when IT-PLC outputs the information of permission for station-passing to ME-PLC.
S343: IT-PLC sets DB6101.IT_MSG.IT_CTRL_WRD.MES_COMPLETE;

DB6101.IT_MSG.IT_CTRL_WRD.MES_COMPLETE is a variable in the DB block allocated by IT-PLC for the station No. 6101 to store that IT-PLC notifies ME-PLC that data processing has been completed.

Here, IT_MSG.IT_CTRL_WRD.MES_COMPLETE represents that IT-PLC notifies ME-PLC that the data processing has been completed.
S344:
DB6101.ME_MSG.ME_CTRL_WRD.MES_COMPLETE_RECEINED=1? If yes, the process proceeds to S324; or if not, the process returns to S344.

DB6101.ME_MSG.ME_CTRL_WRD.MES_COMPLETE_RECEINED is a variable in the DB block allocated by ME-PLC for the station No. 6101 to store whether the station-passing of ME-PLC is successful.

Here, ME_MSG.ME_CTRL_WRD.MES_COMPLETE_RECEINED=1 represents that the data processing of ME-PLC has been completed. After ME-PLC processes the processing of station-passing according to the station-passing instruction, ME-PLC sets MES_COMPLETE _RECEINED of ME-PLC to 1. IT-PLC regularly acquires MES_COMPLETE_RECEINED=1 from a certain position of ME-PLC, which indicates that IT-PLC confirms that ME-PLC has completed the station-passing. After a yarn spindle on a station controlled by ME-PLC passes through the station, the control bit of the station is cleared and the cache data is cleared.

It should be noted that the above-mentioned station numbers, error code numbers, DB block numbers, variable names, storage address names, FC function module names, and FB function module name are merely exemplary and not restrictive, and can be set or adjusted according to actual requirements.

It should be understood that the schematic diagrams shown in FIGS. 1, 3 and 4 are merely exemplary and not restrictive, and are extensible. Those skilled in the art may make various obvious modifications and/or substitutions based on the examples illustrated in FIGS. 1, 3 and 4, and the resulting technical solutions still fall within the scope of the disclosure of the embodiments of the present disclosure.

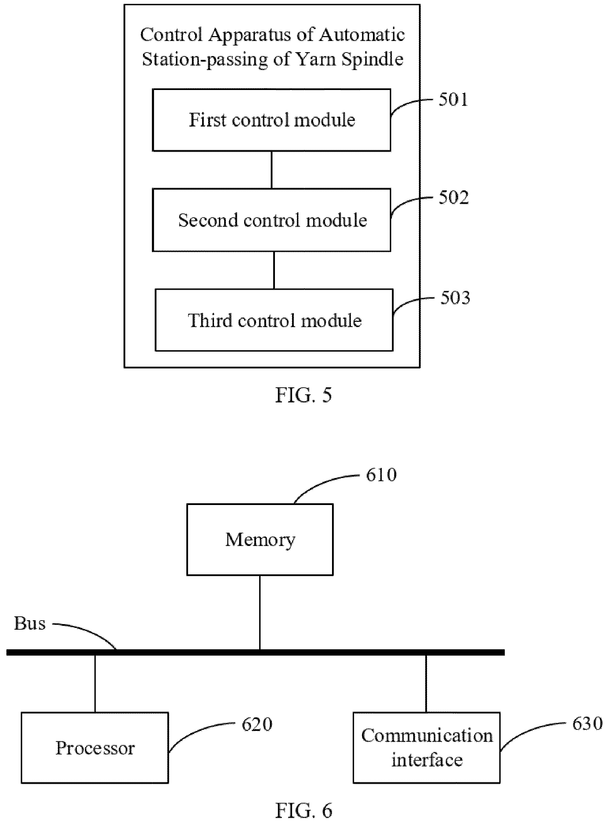

An embodiment of the disclosure provides an apparatus for controlling automatic station-passing of a yarn spindle, which is applied to a system for controlling automatic station-passing of the yarn spindle, where the system for controlling automatic station-passing of the yarn spindle includes an MES, a first PLC and a plurality of second PLCs, the plurality of second PLCs are connected to the first PLC, and the first PLC is connected to the MES, where one of the plurality of second PLCs is used for controlling at least one station; as shown in FIG. 5, the apparatus for controlling automatic station-passing of the yarn spindle may include:
a first control module 501 configured to obtain, by the first PLC, second operational data of a target station from a second PLC corresponding to the target station, and obtain first operational data of the target station according to the second operational data;
a second control module 502 configured to send, by the first PLC, the first operational data to the MES and receive station-passing indication information determined by the MES based on the first operational data for the target station; and
a third control module 503 configured to parse, by the first PLC, the station-passing indication information to obtain a parsing result and return the parsing result to the second PLC corresponding to the target station, so that the second PLC controls the target station based on the parsing result to execute a yarn spindle station-passing task.

In some embodiments, the apparatus for controlling automatic station-passing of the yarn spindle further includes a fourth control module (not shown in FIG. 5), where the fourth control module is configured to: under the condition that the parsing result indicates permission for station-passing, inform, through the second PLC, station-passing equipment or directly control the station-passing equipment to convey the processed yarn spindle at the target station to the next station of the target station.

In some embodiments, the apparatus for controlling automatic station-passing of the yarn spindle further includes a fifth control module (not shown in FIG. 5), where the fifth control module is configured to: under the condition that the parsing result indicates prohibition for station-passing, inform, through the second PLC, the station-passing equipment or directly control the station-passing equipment to convey the processed yarn spindle at the target station to a rechecking station of the target station.

In some embodiments, the apparatus for controlling automatic station-passing of the yarn spindle further includes a sixth control module (not shown in FIG. 5), where the sixth control module is configured to: under the condition that the parsing result indicates prohibition for station-passing, inform, through the second PLC, the station-passing equipment or directly control the station-passing equipment to disable the target station from executing the yarn spindle station-passing task, and resend the second operational data for the target station.

In some embodiments, the apparatus for controlling automatic station-passing of the yarn spindle further includes an abnormality handling module (not shown in FIG. 5), where the abnormality handling module is configured to: under the condition that the parsing result indicates prohibition for station-passing, inform, by the second PLC, the station control equipment or directly control the station-passing equipment to output a station-passing abnormality alarm.

In some embodiments, the apparatus for controlling automatic station-passing of the yarn spindle further includes a seventh control module (not shown in FIG. 5), where the seventh control module is configured to: parse, by the MES, the first operational data to obtain target character string data corresponding to the target station; judge whether the yarn spindle at the target station meets the station-passing condition based on the target character string data, if the station-passing condition is met, determine that the station-passing indication information is permission for station-passing; if the station-passing condition is not met, determine that the station-passing indication information is prohibition for station-passing.

In some embodiments, the apparatus for controlling automatic station-passing of the yarn spindle further includes the first control module 501 configured to regularly obtain, by the first PLC, the second operational data of the target station from the second PLC.

In some embodiments, the apparatus for controlling automatic station-passing of the yarn spindle further includes an eighth control module (not shown in FIG. 5), where the eighth control module is configured to: convert, by the first PLC, the second operational data into the first operational data in a data storage format according to a preset data storage format, where the first operational data is stored in a data storage area allocated to the target station by the first PLC, and different types of variables in the first operational data correspond to different fixed addresses in the data storage area.

It should be understood by those skilled in the art that functions of processing modules in the apparatus for controlling automatic station-passing of the yarn spindle according to the embodiments of the present disclosure may be understood by referring to the foregoing description of the method for controlling automatic station-passing of the yarn spindle. The processing modules in the apparatus for controlling automatic station-passing of the yarn spindle according to the embodiments of the present disclosure may be implemented by an analog circuit that performs the functions of the embodiments of the present disclosure, or may be implemented by running software that performs the functions of the embodiments of the present disclosure on an electronic device.

The apparatus for controlling automatic station-passing of the yarn spindle according to the embodiments of the present disclosure can realize management of automatic station-passing of the yarn spindles to improve the efficiency of the station-passing of the yarn spindles.

According to an embodiment of the present disclosure, the disclosure also provides an electronic device and a readable storage medium.

FIG. 6 is a block diagram of an electronic device according to an embodiment of the present disclosure. As shown in FIG. 6, the electronic device includes: a memory 610 and a processor 620, the memory 610 storing therein a computer program operable on the processor 620. The number of the memory 610 and the processor 620 may be one or more. The memory 610 may store one or more computer programs that, when executed by the electronic device, cause the electronic device to perform the methods according to the above-described method embodiments. The electronic device may further include: the communication interface 630 is used for communicating with an external device to perform data interactive transmission.

If the memory 610, the processor 620, and the communication interface 630 are implemented independently, the memory 610, the processor 620, and the communication interface 630 may connect to and communicate with each other through a bus. The bus may be an Industry Standard Architecture (ISA) bus, a Peripheral Component Interconnect (PCI) bus, an Extended ISA (EISA) bus, or the like. The bus may be divided into an address bus, a data bus, a control bus, for example. For sake of illustration, the bus is represented by only one thick line in FIG. 6, but it does not mean only one bus or one type of bus is provided.

Optionally, in an implementation, if the memory 610, the processor 620, and the communication interface 630 are integrated on a chip, the memory 610, the processor 620, and the communication interface 630 may communicate with each other through an internal interface.

It should be understood that the processor may be a Central Processing Unit (CPU) or other general-purpose processor, a Digital Signal Processing (DSP), an Application Specific Integrated Circuit (ASIC), a Field Programmable Gate Array (FPGA) or other programmable logic device, discrete gate or transistor logic device or discrete hardware components, for example. The general-purpose processor may be a microprocessor or any conventional processor. It is noted that the processor may be a processor supporting Advanced RISC Machine (ARM) architecture.

Further, optionally, the memory may include a read-only memory and a random-access memory, and may further include a nonvolatile random-access memory. The memory may be a volatile memory or a nonvolatile memory, or may include both the volatile and the nonvolatile memory. The non-volatile memory may include a Read-Only Memory (ROM), a Programmable ROM (PROM), an Erasable PROM (EPROM), an Electrically EPROM (EEPROM), or a flash Memory. The volatile memory may include a Random-Access Memory (RAM), which acts as an external cache memory. By way of example and not limitation, many forms of RAM are available, such as Static RAM (SRAM), Dynamic Random-Access Memory (DRAM), Synchronous DRAM (SDRAM), Double Data Rate SDRAM (DDR SDRAM), Enhanced SDRAM (ESDRAM), Synchlink DRAM (SLDRAM), and Direct RAMBUS RAM (DR RAM).

The above embodiments may be implemented in whole or in part by software, hardware, firmware, or any combination thereof. When implemented in software, they may be implemented in whole or in part in the form of a computer program product. The computer program product includes one or more computer instruction. The computer instruction, when loaded and executed on a computer, can all or partially generate the flows or functions described in accordance with the embodiments of the disclosure. The computer may be a general-purpose computer, a special purpose computer, a network of computers, or other programmable devices. The computer instruction can be stored in a computer-readable storage medium or transmitted from one computer-readable storage medium to another computer-readable storage medium. For example, the computer instruction can be transmitted from one website, computer, server, or data center to another website, computer, server, or data center via wire (e.g., coaxial cable, fiber optic or Digital Subscriber Line (DSL)) or wireless (e.g., infrared, Bluetooth of microwave). The computer-readable storage medium can be any available medium that can be accessed by a computer or a data storage device, such as a server and a data center, that includes one or more available medium integration. The available medium may be a magnetic medium (e.g., floppy Disk, hard Disk, magnetic tape), an optical medium (e.g., Digital Versatile Disk (DVD)), or a semiconductor medium (e.g., Solid State Disk (SSD)), for example. It should be noted that the computer-readable storage medium referred to in the disclosure can be non-volatile storage medium, i.e., non-transitory storage medium.

It will be understood by those skilled in the art that all or part of the steps for performing the above embodiments may be implemented by hardware, or may be implemented by a program instructing relevant hardware, where the program may be stored in a computer-readable storage medium, and the storage medium may be a read-only memory, a magnetic disk or an optical disk.

In the description of the embodiments of the present disclosure, the description with reference to the terms such as "one embodiment", "some embodiments", "an example", "a specific example" or "some examples" means that a particular feature, structure, material, or characteristic described in connection with the embodiment or example is included in at least one embodiment or example of the present disclosure. Furthermore, the particular features, structures, materials, or characteristics described may be combined in any suitable manner in any one or more embodiments or examples. Moreover, various embodiments or examples and features in various embodiments or examples described in this specification can be combined and grouped by one skilled in the art if there is no mutual conflict.

In the description of the embodiments of the present disclosure, the sign "/" indicates a meaning of "or", for example, A/B indicates a meaning of A or B, unless otherwise specified. The term "and/or" herein is merely an association relationship describing associated objects, and means that there may be three relationships, for example, A and/or B may mean: A alone, both A and B, and B alone.

In the description of the embodiments of the present disclosure, the terms "first" and "second" are used for descriptive purposes only and should not be construed as indicating or implying relative importance or implicitly indicating the number of technical features as indicated. Thus, a feature defined as "first" or "second" may explicitly or implicitly include one or more features. In the description of the embodiments of the present disclosure, "a plurality" means two or more unless otherwise specified.

The above description is intended only to illustrate embodiments of the present disclosure, and should not be taken as limiting thereof, and any modifications, equivalents and improvements made within the principle of the present disclosure will fall within the scope of the present disclosure.

## Claims

1. A method for controlling automatic station-passing of the yarn spindle, applied to a system for controlling automatic station-passing of the yarn spindle, wherein the system for controlling automatic station-passing of the yarn spindle comprises a Manufacturing Execution System, MES, a first Programmable Logic Controller, PLC, and a plurality of second PLCs, wherein the plurality of second PLCs are connected to the first PLC, and the first PLC is connected to the MES;
the method for controlling automatic station-passing of the yarn spindle includes:
obtaining (S201), by the first PLC, second operational data of a target station from a second PLC corresponding to the target station, and obtaining first operational data of the target station according to the second operational data, wherein one of the plurality of second PLCs is configured for controlling at least one station;
sending (S202), by the first PLC, the first operational data to the MES and receiving station-passing indication information determined by the MES based on the first operational data for the target station; and
parsing (S203), by the first PLC, the station-passing indication information to obtain a parsing result and returning the parsing result to the second PLC corresponding to the target station, so that the second PLC controls the target station based on the parsing result to execute a yarn spindle station-passing task.

2. The method of claim 1, wherein the controlling, by the second PLC, the target station based on the parsing result to execute the yarn spindle station-passing task comprises:
under the condition that the parsing result indicates permission for station-passing, informing, through the second PLC, the station-passing equipment or directly controlling the station-passing equipment to convey processed yarn spindle at the target station to the next station of the target station.

3. The method of claim 1, wherein the controlling, by the second PLC, the target station based on the parsing result to execute the yarn spindle station-passing task comprises:
under the condition that the parsing result indicates prohibition for station-passing, informing, through the second PLC, the station-passing equipment or directly controlling the station-passing equipment to convey processed yarn spindle at the target station to a rechecking station of the target station.

4. The method of claim 1, wherein the controlling, by the second PLC, the target station based on the parsing result to execute the yarn spindle station-passing task comprises:
under the condition that the parsing result indicates prohibition for station-passing, informing, through the second PLC, the station-passing equipment or directly controlling the station-passing equipment to disable the target station from executing the yarn spindle station-passing task, and resending the second operational data for the target station.

5. The method of claim 3 or 4, wherein the method for controlling the automatic station-passing of the yarn spindle further comprises:
under the condition that the parsing result indicates prohibition for station-passing, informing, by the second PLC, the station control equipment to output a station-passing abnormality alarm.

6. The method of claim 1, wherein the method for controlling the automatic station-passing of the yarn spindle further comprises:
parsing, by the MES, the first operational data to obtain target character string data corresponding to the target station; and
judging whether the yarn spindle at the target station meets the station-passing condition based on the target character string data, in a case of the station-passing condition is met, determining that the station-passing indication information is permission for station-passing; in a case of the station-passing condition is not met, determining that the station-passing indication information is prohibition for station-passing.

7. The method of claim 1, wherein the obtaining, by the first PLC, the second operational data of the target station from the second PLC corresponding to the target station comprises:
regularly obtaining, by the first PLC, the second operational data of the target station from the second PLC.

8. The method of claim 1, wherein the method for controlling the automatic station-passing of the yarn spindle further comprises:
converting, by the first PLC, the second operational data into the first operational data in a data storage format according to a preset data storage format, wherein the first operational data is stored in a data storage area allocated to the target station by the first PLC, and different types of variables in the first operational data correspond to different fixed addresses in the data storage area.

9. An apparatus for controlling automatic station-passing of a yarn spindle, applied to a system for controlling automatic station-passing of the yarn spindle, wherein the system for controlling automatic station-passing of the yarn spindle comprises a Manufacturing Execution System, MES, a first Programmable Logic Controller, PLC, and a plurality of second PLCs, wherein the plurality of second PLCs are connected to the first PLC, and the first PLC is connected to the MES; the apparatus for controlling automatic station-passing of a yarn spindle comprises:
a first control module (501) configured to obtain, by the first PLC, second operational data of a target station from a second PLC corresponding to the target station, and obtain first operational data of the target station according to the second operational data, wherein one of the plurality of second PLCs is configured for controlling at least one station;
a second control module (502) configured to send, by the first PLC, the first operational data to the MES and receive station-passing indication information determined by the MES based on the first operational data for the target station; and
a third control module (503) configured to parse, by the first PLC, the station-passing indication information to obtain a parsing result and return the parsing result to the second PLC corresponding to the target station, so that the second PLC controls the target station based on the parsing result to execute a yarn spindle station-passing task.

10. A non-transitory computer-readable storage medium storing a computer instruction thereon, wherein the computer instruction is used to cause a computer to execute the method of any one of claims 1 to 8.
